# EUROPÄISCHE PATENTSCHRIFT

(11) **EP 4 252 503 B1**
(45) Veröffentlichungstag und Bekanntmachung des Hinweises auf die Patenterteilung: **28.01.2026**
(21) Anmeldenummer: 23164412.1
(22) Anmeldetag: 27.03.2023
(51) Int. Cl.: A01B 59/06, A01D 34/00, A01D 34/66, A01D 75/00

(54) **LANDWIRTSCHAFTLICHER MÄHER ZUM BETREIBEN IM SCHUBBETRIEB**
AGRICULTURAL MOWER FOR OPERATING IN OVERRUN MODE
FAUCHEUSE AGRICOLE POUVANT FONCTIONNER EN POUSSÉE

(30) Priorität: 28.03.2022 DE 102022107254
(43) Veröffentlichungstag der Anmeldung: 04.10.2023
(73) Patentinhaber: Maschinenfabrik Bernard Krone GmbH & Co. KG, 48480 Spelle (DE)
(72) Erfinder: LÖMKER, Jens, 48496 Hopsten (DE); BÜTER, Richard, 49751 Sögel (DE); GROTHE, Hendrik, 49767 Twist (DE)

(56) Entgegenhaltungen:
- EP-A1- 1 952 683
- EP-A1- 3 766 327
- EP-B1- 3 381 265
- DE-A1- 102017 114 281
- DE-B3- 102004 031 514
- DE-B4- 10 203 067
- DE-C1- 4 415 205

## Beschreibung

Die vorliegende Erfindung betrifft einen landwirtschaftlichen Mäher zum Betreiben im Schubbetrieb nach dem Oberbegriff des Patentanspruchs 1, einen Arbeitszug umfassend einen Schlepper und den Mäher, sowie ein Verfahren zum Feststellen eines Mähwerks eines Mähers in einer Mittellage.

Um in Arbeitsstellung eine gute Bodenanpassung gewährleisten zu können, werden Anbaugeräte wie beispielsweise Mäher, die frontseitig an ein Hubwerk eines Schleppers anbaubar sind, oftmals pendelnd an einem Anbaurahmen aufgehängt, so dass sie quer zur Fahrtrichtung hin und her schwenkbar, das heißt pendelbar, sind. In angehobener Vorgewendestellung und Transportstellung kann diese Form der Aufhängung jedoch dazu führen, dass das Anbaugerät unkontrolliert pendelt. Es kann dadurch, insbesondere beim Kurvenfahren, auf den Boden aufschlagen oder in den (Feld-) Boden einstechen. In Transportstellung bei Straßenfahrt kann es durch das Pendeln des Anbaugerätes, vor allem beim Durchfahren von Kreisverkehren oder bei schnellen Ausweichmanövern, für andere Verkehrsteilnehmer zu gefährlichen Situationen kommen. Außerdem führt das Hin- und Herschwenken des Anbaugerätes zu einer stoßartigen oder schlagartigen Belastung des Schleppers.

Um diesem entgegen zu wirken, werden regelmäßig Dämpfungsmittel vorgesehen, wie beispielsweise Federn oder Elastomere, die das Hin- und Herschwenken des Anbaugerätes dämpfen. Die Dämpfung wirkt sich jedoch in Arbeitsstellung negativ auf die Bodenanpassung aus, da auch diese durch die Dämpfungsmittel gedämpft erfolgt. Beispielsweise ist beim Mähen, insbesondere bei hohen Geschwindigkeiten, ein ungedämpftes Schwenken für ein gutes Arbeitsergebnis gewünscht.

Die Druckschrift DE 10 2017 114 281 A1 offenbart ein Vorsatzgerät für einen Feldhäcksler wie beispielsweise ein Maisgebiss, mit einem Querausgleichszylinder, der zwischen zwei Betriebssituationen überführbar ist. In der ersten Betriebssituation wird die Querausgleichsbewegung des Vorsatzgerätes gesteuert, während das Vorsatzgerät in der zweiten Betriebssituation frei pendeln kann.

Aufgabe der vorliegenden Erfindung ist es, einen in einer solchen Weise pendelnd aufgehängten Mäher zum Anbau an einen Schlepper zu schaffen, der die obigen Nachteile vermeidet, und daher auch in angehobener Stellung, insbesondere im Vorgewende oder beim Straßentransport, nicht zu einem unkontrollierten Hin- und Herschwenken neigt, und andererseits eine gute Bodenanpassung gewährleistet.

Die Aufgabe wird gelöst mit einem Mäher mit den Merkmalen des unabhängigen Patentanspruchs 1, einem Arbeitszug mit den Merkmalen des unabhängigen Patentanspruchs 11, sowie einem Verfahren mit den Merkmalen des unabhängigen Patentanspruchs 14. Vorteilhafte Ausführungsformen sind den abhängigen Ansprüchen entnehmbar.

Dafür wird ein landwirtschaftlicher Mäher geschaffen. Der Mäher ist zum Betreiben im Schubbetrieb vorgesehen. Er weist einen Rahmen auf, der zum Anbauen an einen Dreipunkt-Kraftheber, beispielsweise eines Schleppers, vorgesehen ist. Der Dreipunkt- Kraftheber kann frontseitig des Schleppers angeordnet sein. Es ist aber auch möglich, dass der Dreipunkt- Kraftheber heckseitig des Schleppers angeordnet ist und der Schlepper im Rückwärtsfahrbetrieb betrieben wird.

Der Mäher weist ein Mähwerk mit einem Mähholm auf, der sich in eine Querrichtung quer zu einer Fahrtrichtung des Mähers erstreckt. Das Mähwerk ist pendelbar am Rahmen aufgehängt. Durch die pendelnde Aufhängung am Rahmen ist das Mähwerk in einem Feldbetrieb bodenkopierend um eine Schwenkachse von einer Mittellage ausgehend in und gegen eine Schwenkrichtung relativ zum Rahmen hin und her schwenkbar. Dabei gleitet es im Feldbetrieb mit einem bevorzugt einstellbaren Auflagedruck über den Feldboden.

Die Schwenkachse weist eine Erstreckungskomponente in Fahrtrichtung auf. Zudem kann sie eine Erstreckungskomponente in eine Hochrichtung, die sich quer zur Fahrtrichtung und quer zur Querrichtung erstreckt, aufweisen. Dadurch ist das Mähwerk auch beim Schwenken in und gegen die Schwenkrichtung in Querrichtung ausgerichtet.

Der Mäher zeichnet sich dadurch aus, dass er einen Linearaktor aufweist, mit dem das Mähwerk, insbesondere in angehobener Stellung, in der Mittellage feststellbar ist.

Durch das Feststellen, das heißt Fixieren, in der Mittellage kann das Mähwerk nicht mehr in und/oder gegen die Schwenkrichtung verschwenken. Der Linearaktor verhindert daher ein unkontrolliertes Pendeln des Mähwerks.

Prinzipiell ist das Feststellen des Mähwerks auch im Feldbetrieb möglich. Allerdings kann das Mähwerk dann nicht mehr bodenkopierend über den Feldboden geführt werden. Das Mähwerk wird daher bevorzugt nur in einer angehobenen Stellung mit dem Linearaktor festgestellt, beispielsweise beim Straßentransport und/oder in einem Vorgewende.

Im Folgenden wird der Betrieb des Mähers mit abgesenktem, bodenkopierend betriebenem Mähwerk als Feldbetrieb bezeichnet.

Der Linearaktor ist bevorzugt zwischen dem Rahmen des Mähers und dem Mähwerk angeordnet. Dadurch kann das Mähwerk durch ein Aktivieren des Linearaktors festgestellt werden. Der Linearaktor ist zudem deaktivierbar, so dass das Mähwerk bei deaktiviertem Linearaktor relativ zum Rahmen schwenkbar ist. In einer ersten bevorzugten Ausführungsform ist das Mähwerk bei deaktiviertem Linearaktor relativ zum Rahmen frei, insbesondere ohne eine Dämpfung durch ein Dämpfungsmittel, schwenkbar. Es ist aber auch eine Ausführungsform bevorzugt, bei der der Linearaktor als Dämpfungsmittel zum Dämpfen der Schwenkbewegung des Mähwerks relativ zum Rahmen vorgesehen ist.

Dafür kann der Linearaktor als ein elektrischer Linearmotor oder als ein pneumatisch wirkender Linearaktor ausgebildet sein. Es ist aber bevorzugt, dass er als ein hydraulischer oder elektrohydraulischer Zylinder ausgebildet ist. Eine erste Anlenkung des Zylinders ist dann am Rahmen des Mähers, und eine zweite Anlenkung des Zylinders ist dann am Mähwerk, insbesondere einer Strebe des Mähwerks, angeordnet.

In dieser Ausführungsform ist ein Aktivieren des Zylinders durch Beaufschlagen des Zylinders mit einem Feststelldruck möglich. Der Mäher ist daher bevorzugt dazu eingerichtet, den Zylinder zum Feststellen des Mähwerks in der Mittellage mit dem Feststelldruck zu beaufschlagen, wobei sich der Zylinder in eine Mittelstellung verstellt. Dafür wird bevorzugt ein einfachwirkender Anschluss des Zylinders genutzt. Am einfachwirkenden Anschluss liegt dann der Feststelldruck an. Dabei ist es bevorzugt, dass das Mähwerk in der Mittelstellung eine in horizontalem Gelände horizontale Ausrichtung annimmt. Dadurch ist ein Abstand des Mähwerks zum Boden überall gleich.

Der Zylinder ist durch Entlasten, das heißt drucklos Schalten, des einfachwirkenden Anschlusses deaktivierbar. Dabei kann der Zylinder im Feldbetrieb vollständig entlastet, das heißt drucklos, sein. Dadurch ist das Mähwerk im Feldbetrieb frei um die Schwenkachse schwenkbar.

Es ist aber ebenfalls bevorzugt, dass der Zylinder als Dämpfungsmittel zum Dämpfen der Schwenkbewegung um die Schwenkachse vorgesehen ist. In dieser Ausführungsform ist er bevorzugt als zweifachwirkender Zylinder ausgebildet. Der Zylinder weist dann einen zweifachwirkenden Anschluss auf, der zum Dämpfen der Schwenkbewegung mit einem Dämpfungsdruck beaufschlagt ist. Dadurch ist der Zylinder im Feldbetrieb nicht (vollständig) drucklos, so dass das Mähwerk nur mit einer zu dem beaufschlagten Dämpfungsdruck korrespondierenden Dämpfung um die Schwenkachse schwenkbar ist.

Der deaktivierte Zylinder ist daher, insbesondere unabhängig davon, ob er drucklos oder mit dem Dämpfungsdruck beaufschlagt ist, in einer kontinuierlichen Bewegung um die Schwenkachse in und gegen die Schwenkrichtung hin und her schwenkbar. Dadurch ist im Feldbetrieb eine stufenlose Anpassung an die Geländeoberfläche möglich.

In einer besonders bevorzugten Ausführungsform ist der Zylinder als Doppelzylinder ausgebildet, und weist dafür zwei Zylinderteile mit jeweils einem Kolben und einer Druckkammer zur Aufnahme jeweils eines der beiden Kolben auf, wobei die Kolben in ihrer Druckkammer jeweils reversibel von einer Ausgangslage in eine Endlage linear verschieblich sind. Dabei weist der Doppelzylinder zum Beaufschlagen der beiden Kolben mit dem Feststelldruck bevorzugt für jeden der beiden Kolben jeweils einen einfachwirkenden Anschluss auf. Besonders bevorzugt weisen die Druckräume und/oder Kolben dieselben Ausmaße auf, so dass sich die Kolben bei Beaufschlagen mit demselben Feststelldruck gleichermaßen in ihrem Druckraum verschieben. Dadurch kann die Mittelstellung sehr einfach durch gleichmäßiges Beaufschlagen beider Kolben mit demselben Feststelldruck eingestellt werden.

Die einfachwirkenden Anschlüsse beider Kolben sind dafür bevorzugt mittels einer Verbindungsleitung miteinander verbunden. Die Verbindungsleitung ermöglicht auf sehr einfache Weise das gleichzeitige, gleichermäßige Beaufschlagen der Kolben mit dem Feststelldruck. Dabei ist es bevorzugt, dass die beiden Kolben in der Mittelstellung des Zylinders in ihrer Endlage angeordnet sind.

Weiterhin bevorzugt ist in einer eingezogenen Stellung des Zylinders ein erster der beiden Kolben in der Ausgangslage, und der andere in der Endlage angeordnet, und in einer ausgefahrenen Stellung des Zylinders der erste der beiden Kolben in der Endlage, und der andere in der Ausgangslage angeordnet.

Der, insbesondere optional nutzbare, zweifachwirkende Anschluss zum Dämpfen der Schwenkbewegung um die Schwenkachse im Feldbetrieb ist bevorzugt an dem Kolbenteil angeordnet, der in ausgefahrener Stellung in Endlage angeordnet ist. Um das Verschwenken des Mähwerks im Feldbetrieb zu dämpfen, ist es weiterhin bevorzugt, dass die beiden Druckkammern des Zylinders mittels eines Durchgangs miteinander verbunden sind. Der Durchgang ermöglicht einen Druckausgleich zwischen den beiden Druckkammern. Dadurch ist kein zweiter zweifachwirkender Anschluss an der zweiten Druckkammer erforderlich. Der Mäher ist bevorzugt dazu eingerichtet, den zweifachwirkenden Anschluss zum Dämpfen der Schwenkbewegung im Feldbetrieb mit Dämpfungsdruck zu beaufschlagen.

Die Aufgabe wird weiterhin gelöst mit einem Arbeitszug umfassend einen Schlepper und einen solchen landwirtschaftlichen Mäher. Dabei ist der Mäher zum Betreiben im Schubbetrieb an einen Dreipunkt- Kraftheber des Schleppers angebaut. Das Mähwerk des Mähers ist in einer angehobenen Stellung, die beispielsweise im Vorgewende und/oder beim Straßenbetrieb eingenommen wird, in der Mittellage feststellbar. Dadurch schwenkt das Mähwerk nicht hin und her, so dass es nicht auf den Boden aufschlägt, nicht in den (Feld-) Boden einstechen kann, und es bei Straßenfahrt auch nicht durch ein Schwenken des Mähwerks um die Schwenkachse zu gefährlichen Situationen kommen kann. Außerdem wird eine dadurch hervorgerufene stoßartige oder schlagartige Belastung des Schleppers vermieden.

Vorzugsweise ist der Mäher durch Anheben der Unterlenker des DreipunktKrafthebers reversibel von einer Arbeitsstellung im Feldbetrieb in eine angehobene Stellung im Vorgewende und/oder beim Straßentransport anhebbar. Dabei ist der Arbeitszug bevorzugt dazu eingerichtet, das Mähwerk beim Anheben des Mähers mit dem Linearaktor in der Mittellage festzustellen.

Dafür ist der Linearaktor in einer bevorzugten Ausführungsform als hydraulischer oder elektrohydraulischer Zylinder, insbesondere als Doppelzylinder mit zwei Zylinderteilen, ausgebildet. Die Zylinderteile weisen dabei jeweils einen Kolben auf, der in einer Druckkammer hin und her verschieblich ist.

Der Zylinder kann an eine separate Druckversorgung, insbesondere des Schleppers, angeschlossen sein. Zum Feststellen des Mähwerks in der Mittelage ist es jedoch bevorzugt, dass eine Anschlussleitung zum Beaufschlagen der Unterlenker des Dreipunkt- Krafthebers mit einem (Hebe-) druck mit einer Verbindungsleitung zum Beaufschlagen der Kolben mit dem Feststelldruck verbunden ist. Dadurch wird der Zylinder beim Anheben der Unterlenker des Dreipunkt- Krafthebers des Schleppers automatisch in die Mittelstellung verstellt, sodass das Mähwerk festgestellt wird.

Die Aufgabe wird weiterhin gelöst mit einem Verfahren zum Feststellen eines Mähwerks eines landwirtschaftlichen Mähers, insbesondere eines erfindungsgemäßen landwirtschaftlichen Mähers, bei dem ein hydraulischer Zylinder mit einem Feststelldruck beaufschlagt wird, so dass sich der Zylinder in eine Mittelstellung verstellt und das Mähwerk in einer Mittellage feststellt. Dabei kann der Zylinder als Doppelzylinder mit zwei Kolben ausgebildet sein, die beim Beaufschlagen des Zylinders mit dem Feststelldruck beide in eine Endlage verschoben werden. Das Verfahren kann beim Anheben des Mähers automatisch ausgeführt werden, und ist für den Bediener daher sehr komfortabel und einfach nutzbar.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) schematisch einen Arbeitszug mit einem Schlepper und einem Mäher, und in (b) den Mäher in einer Seitenansicht mit einem Teilschnitt durch einen Rahmen des Mähers;
- Fig. 2: in (a) - (c) den Arbeitszug in einer Frontansicht, wobei der Mäher in (a) und (c) in verschiedenen Schwenklagen, und in (b) in einer Mittellage gezeigt ist; und
- Fig. 3: in (a) - (c) einen Zylinder zum Feststellen eines Mähwerks des Mähers in verschiedenen Stellungen.

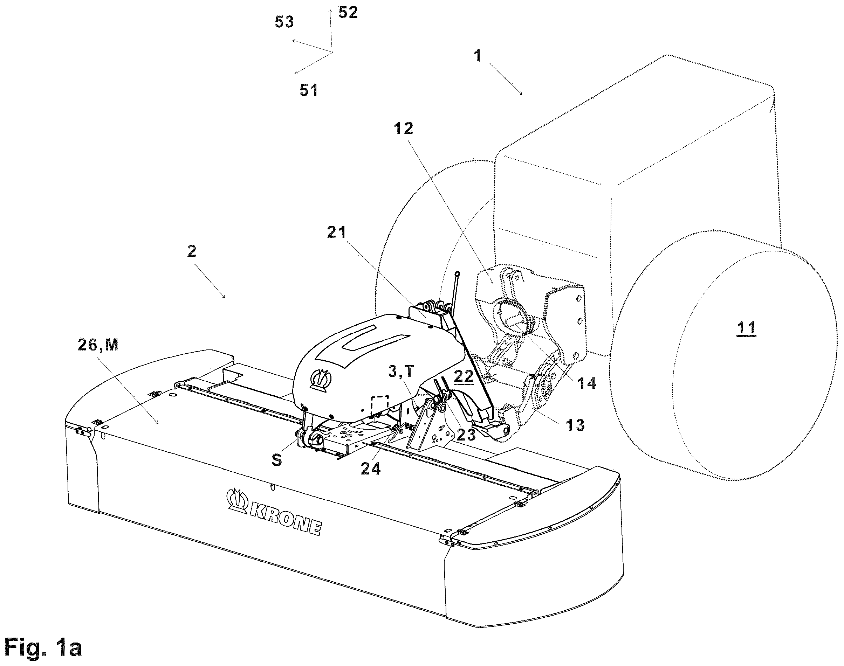

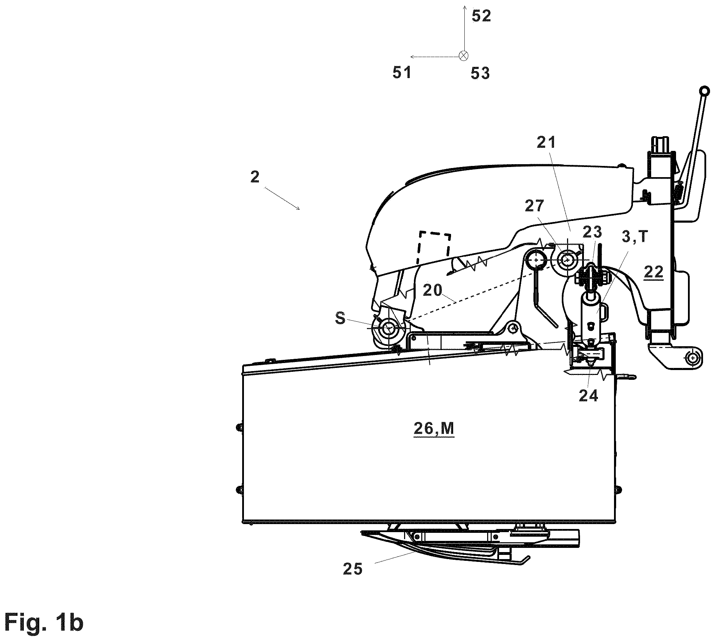

Fig. 1 zeigt in (a) einen Arbeitszug mit einem Schlepper 1, von dem hier nur ein Frontteil schematisch dargestellt ist, und einem Mäher 2. Zur Verdeutlichung sind die vorderen Räder 11 des Schleppers 1 gezeigt.

Der Mäher 2 ist in herkömmlicher Weise an einen frontseitig des Schleppers 1 angeordneten Dreipunkt- Kraftheber 12 des Schleppers 1 angehängt, so dass der Schlepper 1 den Mäher 2 trägt. Dafür weist er einen Rahmen 21 auf. Der Rahmen weist zwei V-förmig zueinander angeordnete Schenkel 22 auf, die endseitig jeweils an einem Unterlenker 13 des Dreipunkt- Krafthebers befestigt sind. Die Anbindung des Rahmens 21 an einen der Unterlenker 13 des Dreipunkt- Krafthebers 12 ist hier sichtbar. Der Rahmen 21 ist mit einem Verbindungspunkt (nicht bezeichnet) der Schenkel 22 an einen Oberlenker (nicht gezeigt) des Dreipunkt- Krafthebers 12 befestigbar. Dies ist der Übersichtlichkeit halber hier nicht dargestellt.

Weiterhin ist ein Zapfwellenanschluss 14 des Schleppers 1 sichtbar. Ein Antrieb des Mähers 2, insbesondere eine Zapfwelle, erfolgt ebenfalls in herkömmlicher Weise und ist aus Gründen der Übersichtlichkeit nicht dargestellt.

Der Mäher 2 ist frontseitig des Schleppers 1 angeordnet und wird im Schubbetrieb betrieben. Dabei bewegt sich der Arbeitszug in eine Fahrtrichtung 51.

Der Mäher 2 weist ein Mähwerk 26 auf, welches sich in eine Querrichtung 53 quer zur Fahrtrichtung 51 des Arbeitszugs erstreckt. Am Mähwerk 26 ist ein Mähholm 25 angeordnet, welcher im Feldbetrieb auf dem Feldboden (nicht gezeigt) aufliegt. Dabei ist ein Auflagedruck des Mähholms 25 auf den Feldboden durch Kraftmittel (nicht gezeigt), die zwischen dem Dreipunkt- Kraftheber 12 und dem Rahmen 21 angeordnet sind, einstellbar.

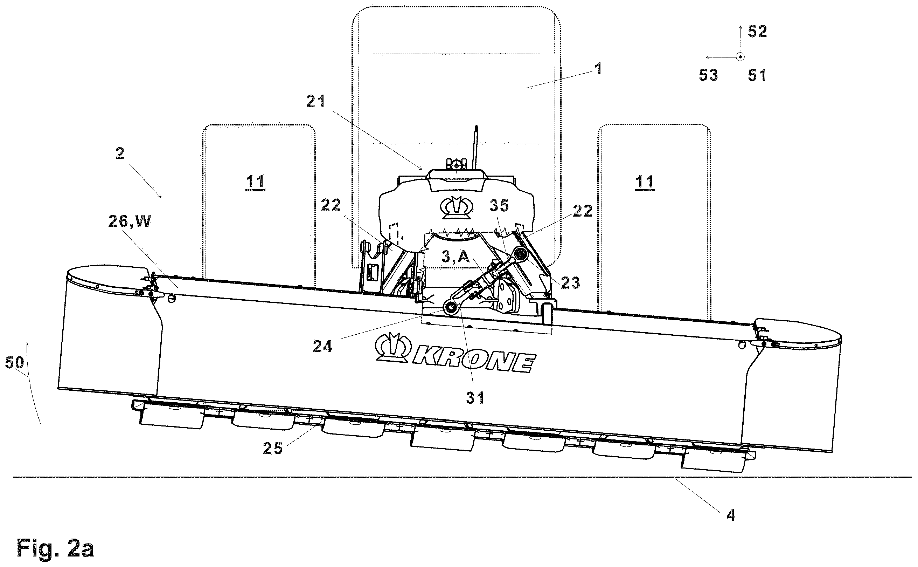

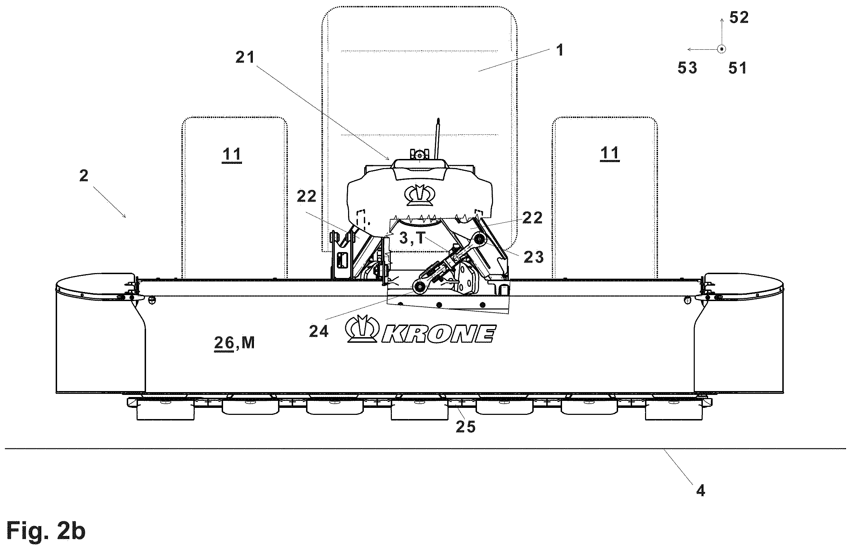

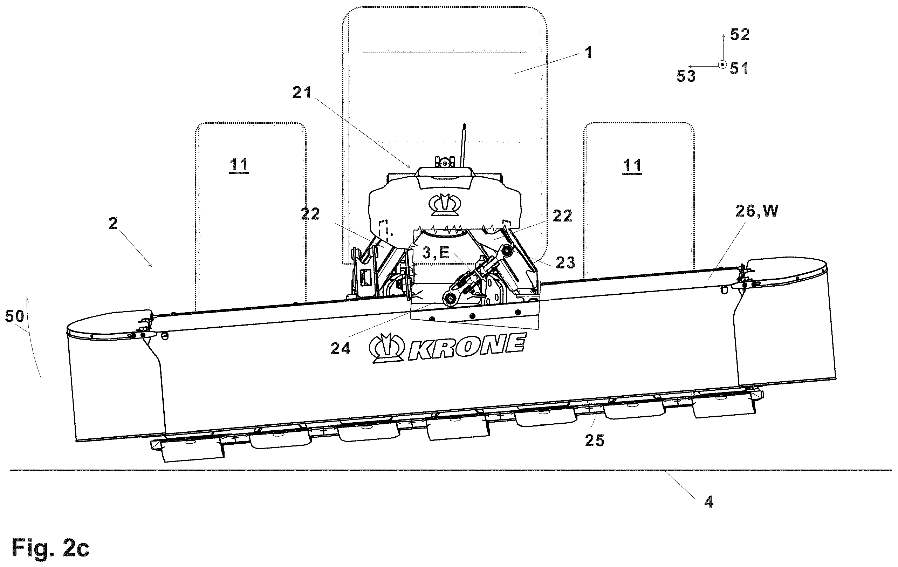

Damit das Mähwerk 26, insbesondere auch noch in stark kupiertem Gelände, weiter insbesondere mit gleichmäßigem Auflagedruck, bodenkopierend über den Feldboden geführt werden kann, ist es pendelnd am Rahmen 21 des Mähers 2 aufgehängt. Dafür sind am Rahmen 21 des Mähwerks 26 zwei voneinander beabstandete Kugelgelenklager S, 27 vorgesehen, an denen das Mähwerk 26 aufgehängt ist, so dass eine Verbindungslinie zwischen den beiden Lagern S, 27 eine Schwenkachse 20 bildet, um die das Mähwerk 26 in und gegen eine Schwenkrichtung 50 (s. Fig. 2) hin und her schwenkbar ist. Eines der beiden Kugelgelenklager S ist hier in einem Schwerpunkt des Mähwerks 26 angeordnet. Es ist aber auch ein anderer Pendelpunkt (nicht gezeigt) zum Aufhängen des Mähwerks 26 denkbar. Der Schwerpunkt kann aufgrund der Bauteile des Mähwerks 26, insbesondere bei einseitigem Antrieb, außermittig angeordnet sein. Die Schwenkachse 20 weist nur Erstreckungskomponenten in Fahrtrichtung 51 und in Hochrichtung 52 auf, so dass das Mähwerk 26 auch beim Hin- und Herschwenken um die Schwenkachse 20 in Querrichtung 53 ausgerichtet ist.

Um das Mähwerk 26 in einer Mittellage M festzustellen, weist der Mäher 2 einen Linearaktor 3 auf, der hier als hydraulischer Zylinder ausgebildet ist. Im Folgenden werden daher die Begriffe Linearaktor 3 und Zylinder synonym verwendet.

Der Zylinder 3 ist zwischen einer Anlenkung 23 am Rahmen 21 des Mähers 2 und einer Anlenkung 24 am Mähwerk 26, beispielsweise an einer Strebe (nicht gezeigt) des Mähwerks 26, angelenkt.

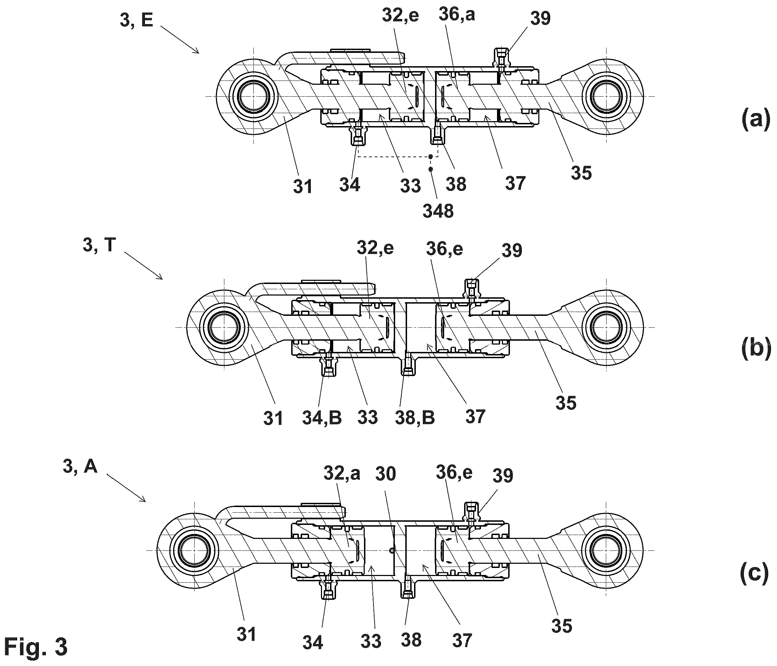

Fig. 1 (b) zeigt den Mäher 2 in einer Seitenansicht, wobei die Fig. 1 (b) den Mäher 2 mit einem Teilschnitt durch den Rahmen 21 zeigt, so dass die Kugelgelenklager S, 27 sowie der Zylinder 3 mit seinen Anlenkungen 23, 24 sichtbar sind. In den Fig. 1 (a) und (b) ist der Mäher 2 in der Mittellage M angeordnet. Der Zylinder 3 befindet sich dabei in einer Mittelstellung T (s. Fig. 3 (b)).

Die Fig. 2 zeigt in (a) - (c) den Arbeitszug in einer Frontansicht, wobei der Mäher 2 in (a) und (c) in verschiedenen Schwenklagen W, in denen das Mähwerk 26 um die Schwenkachse 20 gegenüber der Mittellage M verschwenkt ist, und in (b) in der Mittellage M dargestellt ist. Die Schwenklagen W sowie die Mittellage M sind gegenüber einer horizontalen Referenzlinie 4 verdeutlicht.

In einer ersten Schwenklage W, die Fig. 2 (a) zeigt, ist das Mähwerk 26 in Schwenkrichtung 50 um die Schwenkachse 20 verschwenkt. Dadurch befindet sich der Zylinder 3 in einer eingezogenen Stellung E (s. Fig. 3 (a)). In Fig. 2 (b) ist das Mähwerk 26 in der Mittellage M angeordnet. Es ist dann nicht in oder gegen die Schwenkrichtung 50 um die Schwenkachse 20 verschwenkt. In horizontalem Gelände ist das Mähwerk 26 dann horizontal ausgerichtet. Dadurch befindet sich der Zylinder 3 in einer Mittelstellung T (s. Fig. 3 (a)). In einer zweiten Schwenklage W, die in Fig. 2 (c) dargestellt ist, ist das Mähwerk 26 gegen die Schwenkrichtung 50 verschwenkt. Dadurch befindet sich der Zylinder 3 in einer ausgefahrenen Stellung A (s. Fig. 3 (c)).

Fig. 3 zeigt den Zylinder 3 in (a) in der eingezogenen Stellung, in (b) in der Mittelstellung, und in (c) in der ausgefahrenen Stellung A.

Der Zylinder 3 ist hier als Doppelzylinder ausgebildet. Im Rahmen dieser Figur werden daher die Begriffe Zylinder 3 und Doppelzylinder synonym verwendet. Der Zylinder 3 weist zwei Zylinderteile 31, 35 auf, mit jeweils einem Kolben 32, 36 und einem Druckraum 33, 37, wobei der Kolben 32, 36 jeweils in dem Druckraum 33, 37, in dem er angeordnet ist, hin und her verschieblich ist.

Bei drucklosem Druckraum 33, 37 ist jeder der Kolben 32, 36 jeweils in seinem Druckraum 33, 37 frei hin und her verschieblich. Dadurch können die beiden Kolben 32, 36 jeweils von einer Ausgangslage a ausgehend in eine Endlage e und zurück verschoben werden. Dabei wird der Zylinder 3 von der eingezogenen Stellung E, in der ein erster der beiden Kolben 32 in der Endlage e angeordnet ist, und der andere Kolben 36 in der Ausgangslage a angeordnet ist, kontinuierlich in die ausgefahrene Stellung A verstellt, in der der erste Kolben 32 in der Ausgangslage a, und der andere Kolben 36 in der Endlage e angeordnet ist. Dabei wird die Mittelstellung T, in der beide Kolben 32, 36 in der Endlage e angeordnet sind, durchfahren.

Zum Beaufschlagen der Druckräume 33, 37 mit einem Druck weisen beide Zylinderteile 31, 35 jeweils einen einfachwirkenden Anschluss 34, 38 auf. Die einfachwirkenden Anschlüsse 34, 38 sind jeweils ausgangsseitig der Druckräume 33, 37 angeordnet. Durch Beaufschlagen der einfachwirkenden Anschlüsse 34, 38 mit dem Druck, insbesondere dem Feststelldruck, sind die Kolben 32, 36 daher jeweils von der Ausgangslage a in die Endlage e verschiebbar.

Weiterhin weist einer der Zylinderteile 35 einen zweifachwirkenden Anschluss 39 auf, der endseitig seines Druckraums 37 angeordnet ist. Durch Beaufschlagen des zweifachwirkenden Anschlusses 39 mit einem Druck, insbesondere dem Dämpfungsdruck, kann der Kolben 36 dieses Zylinderteils 35 von der Endlage e in die Ausgangslage a verschoben werden. Um beide Zylinderteile 31, 35 gleichermaßen mit dem Dämpfungsdruck zu beaufschlagen, sind die beiden Druckräume 33, 37 der Zylinderteile 31, 35 durch einen Durchgang 30 (s. Fig. 3 (c)), der insbesondere in einer Zwischenwand (nicht bezeichnet) zwischen den Druckräumen 33, 37 angeordnet ist, miteinander verbunden. Dadurch ist ein Druckausgleich zwischen den beiden Druckräumen 33, 37 des Zylinders 3 möglich, so dass auch der andere Kolben 32 mit verschoben wird.

Die Ausmaße der Zylinderteile 31, 35, insbesondere der Druckräume 33, 37 und Kolben 32, 36, sind jeweils gleich. Bei Beaufschlagen mit demselben Druck werden die Kolben 32, 36 daher gleichermaßen in ihrem Druckraum 33, 37 verschoben.

Bei deaktiviertem Zylinder 3 ist dieser entweder drucklos, so dass weder auf die einfachwirkenden Anschlüsse 34, 38 noch auf den zweifachwirkenden Anschluss 39 ein Druck beaufschlagt ist. Alternativ kann am zweifachwirkenden Anschluss 39 ein Dämpfungsdruck beaufschlagt sein, durch den ein Verschieben der Zylinderteile 31, 35 nur gedämpft erfolgt.

Bei aktiviertem Zylinder 3 sind hingegen die einfachwirkenden Anschlüsse 34, 38 mit einem Feststelldruck B beaufschlagt. Dadurch werden beide Kolben 32, 36 in ihre Endlage e gedrückt. Auf den zweifachwirkenden Anschluss 39 wirkt dann kein Druck. Der Zylinder 3 befindet sich dann in der Mittelstellung T, die Fig. 2 (b) zeigt.

Um Gefahrensituationen im Straßenverkehr sowie ein Einstechen des Mähwerks 26 in den Boden oder ein Aufschlagen des Mähwerks 26 auf den Boden zu vermeiden, sind die einfachwirkenden Anschlüsse 34, 38 hier über eine in Fig. 3 (a) nur schematisch beispielhaft dargestellte Verbindungsleitung 348 miteinander verbunden, und an Hydraulikleitungen (nicht gezeigt) der Unterlenker 13 des Dreipunkt- Krafthebers 12 angeschlossen. Dadurch wird das Mähwerk 26 beispielsweise beim Straßentransport und/oder im Vorgewende automatisch beim Anheben des Mähers 2 in der Mittellage M festgestellt. Die Bedienung ist für einen Fahrer daher sehr einfach und komfortabel möglich.

## Patentansprüche

1. Landwirtschaftlicher Mäher (2), der zum Betreiben im Schubbetrieb vorgesehen ist, und einen Rahmen (21) zum Anbauen an einen Dreipunkt-Kraftheber (12) eines Schleppers (1) aufweist, wobei der Mäher (2) ein Mähwerk (26) mit einem Mähholm (25) aufweist, welcher sich quer zu einer Fahrtrichtung (51) erstreckt, wobei das Mähwerk (26) pendelbar am Rahmen (21) aufgehängt ist, so dass es in einem Feldbetrieb bodenkopierend um eine Schwenkachse (20) von einer Mittellage (M) ausgehend in und gegen eine Schwenkrichtung (50) relativ zum Rahmen (21) hin und her schwenkbar ist,
wobei
der Mäher (2) einen Linearaktor aufweist, mit dem das Mähwerk (26), in einer angehobenen Stellung, die im Vorgewende und/oder beim Straßenbetrieb eingenommen wird, in der Mittellage (M) feststellbar ist, wobei das Mähwerk (26) automatisch beim Anheben des Mähers (2) in der Mittellage (M) festgestellt wird.

2. Landwirtschaftlicher Mäher (2) nach Anspruch 1, **dadurch gekennzeichnet, dass** der Linearaktor zwischen dem Rahmen (21) des Mähers (2) und dem Mähwerk (26) angeordnet ist.

3. Landwirtschaftlicher Mäher (2) nach einem der vorherigen Ansprüche, **dadurch gekennzeichnet, dass** der Linearaktor ein hydraulischer oder elektrohydraulischer Zylinder (3) ist.

4. Landwirtschaftlicher Mäher (2) nach Anspruch 3, **dadurch gekennzeichnet, dass** er dazu eingerichtet ist, den Zylinder (3) zum Feststellen des Mähwerks (26) in der Mittellage (M) mit einem Feststelldruck zu beaufschlagen, so dass sich dieser in eine Mittelstellung (T) verstellt.

5. Landwirtschaftlicher Mäher (2) nach einem der Ansprüche 3 bis 4, **dadurch gekennzeichnet, dass** der Zylinder (3) im Feldbetrieb entweder drucklos ist, oder als Dämpfungsmittel zum Dämpfen der Schwenkbewegung um die Schwenkachse (20) vorgesehen ist.

6. Landwirtschaftlicher Mäher (2) nach einem der Ansprüche 3 bis 5, **dadurch gekennzeichnet, dass** der Zylinder (3) zwei Zylinderteile (31, 35) mit jeweils einem Kolben (32, 36) und einer Druckkammer (33, 37) zur Aufnahme des Kolbens (32, 36) aufweist, wobei die Kolben (32, 36) in ihrer Druckkammer (33, 37) jeweils von einer Ausgangslage (a) in eine Endlage (e) linear verschieblich sind.

7. Landwirtschaftlicher Mäher (2) nach Anspruch 6, **dadurch gekennzeichnet, dass** der Zylinder (3) zum Beaufschlagen der Kolben (32, 36) mit dem Feststelldruck für jeden der Kolben (32, 36) jeweils einen einfachwirkenden Anschluss (34, 38) aufweist, die mittels einer Verbindungsleitung (348) miteinander verbunden sind.

8. Landwirtschaftlicher Mäher (2) nach einem der Ansprüche 6 bis 7, **dadurch gekennzeichnet, dass** in der Mittelstellung (T) des Zylinders (3) beide Kolben (32, 36) in der Endlage (e) angeordnet sind.

9. Landwirtschaftlicher Mäher (2) nach einem der Ansprüche 6 bis 8, **dadurch gekennzeichnet, dass** in einer eingezogenen Stellung (E) des Zylinders (3) ein erster der beiden Kolben (32, 36) in der Ausgangslage (a), und der andere in der Endlage (e) angeordnet ist, und dass in einer ausgefahrenen Stellung (A) des Zylinders (3) der erste der beiden Kolben (32, 36) in der Endlage (e), und der andere in der Ausgangslage (a) angeordnet ist.

10. Landwirtschaftlicher Mäher (2) nach einem der Ansprüche 6 bis 9, **dadurch gekennzeichnet, dass** die beiden Druckkammern (33, 37) mittels eines Durchgangs (30) miteinander verbunden sind, wobei der Zylinder (3) einen zweifachwirkenden Anschluss (39) zum Beaufschlagen eines der beiden Druckkammern (33, 37) mit einem Dämpfungsdruck aufweist, wobei der Mäher (2) dazu eingerichtet ist, den zweifachwirkenden Anschluss (39) im Feldbetrieb zum Dämpfen der Schwenkbewegung mit dem Dämpfungsdruck zu beaufschlagen.

11. Arbeitszug umfassend einen Schlepper (1) und einen landwirtschaftlichen Mäher (2) nach einem der vorherigen Ansprüche, der zum Betreiben im Schubbetrieb an einen Dreipunkt- Kraftheber (12) des Schleppers (1) angebaut ist.

12. Arbeitszug nach Anspruch 11, **dadurch gekennzeichnet, dass** der Mäher (2) durch Anheben von Unterlenkern (13) des Dreipunkt- Krafthebers (12) reversibel von einer Arbeitsstellung im Feldbetrieb in eine angehobene Stellung im Vorgewende und/oder beim Straßentransport anhebbar ist, wobei der Arbeitszug dazu eingerichtet ist, das Mähwerk (26) beim Anheben des Mähers (2) mit dem Linearaktor in der Mittellage (M) festzustellen.

13. Arbeitszug nach Anspruch 12, **dadurch gekennzeichnet, dass** der Linearaktor als Zylinder (3) mit zwei Zylinderteilen (31, 35) ausgebildet ist, die jeweils einen Kolben (32, 36) umfassen, der in einer Druckkammer (33, 37) hin und her verschieblich ist, wobei eine Anschlussleitung zum Beaufschlagen der Unterlenker (13) des Dreipunkt- Krafthebers (12) mit einem Hebedruck mit einer Verbindungsleitung (348) zum Beaufschlagen der Kolben (32, 36) mit einem Feststelldruck zum Feststellen des Mähwerks (26) in der Mittellage (M) verbunden ist.

14. Verfahren zum Feststellen eines Mähwerks (26) eines landwirtschaftlichen Mähers (2) nach einem der Ansprüche 1 - 10, bei dem ein hydraulischer Zylinder (3), insbesondere ein Doppelzylinder mit zwei Kolben (32, 36), mit einem Feststelldruck beaufschlagt wird, so dass sich der Zylinder (3) in eine Mittelstellung (T) verstellt und das Mähwerk (26) in einer Mittellage (M) feststellt.

## Claims

1. Agricultural mower (2) which is designed for operation in overrun mode and comprises a frame (21) for mounting on a three-point hitch (12) of a tractor (1), wherein the mower (2) has a mowing unit (26) having a cutter bar (25) which extends transversely to a direction of travel (51), wherein the mowing unit (26) is pivotally suspended on the frame (21) so that, in field operation, it can pivot back and forth about a pivot axis (20), starting from a central position (M), in and counter to a pivot direction (50) relative to the frame (21) so as to adapt to the ground surface,
wherein
the mower (2) has a linear actuator by means of which the mowing unit (26) can be locked in the central position (M) in a raised placement, which is assumed in the headland and/or during road operation, wherein the mowing unit (26) is automatically locked in the central position (M) when the mower (2) is raised.

2. Agricultural mower (2) according to claim 1, **characterized in that** the linear actuator is arranged between the frame (21) of the mower (2) and the mowing unit (26).

3. Agricultural mower (2) according to either of the preceding claims, **characterized in that** the linear actuator is a hydraulic or electrohydraulic cylinder (3).

4. Agricultural mower (2) according to claim 3, **characterized in that** it is designed to apply a locking pressure to the cylinder (3) in order to lock the mowing unit (26) in the central position (M) so that the cylinder is adjusted into a central placement (T).

5. Agricultural mower (2) according to either of claims 3 to 4,
**characterized in that** the cylinder (3) is either unpressurized in field operation or is provided as a damping means for damping the pivoting movement about the pivot axis (20).

6. Agricultural mower (2) according to any of claims 3 to 5,
**characterized in that** the cylinder (3) has two cylinder parts (31, 35), each having a piston (32, 36) and a pressure chamber (33, 37) for receiving the piston (32, 36), the pistons (32, 36) each being linearly movable in their pressure chamber (33, 37) from an initial position (a) to an end position (e).

7. Agricultural mower (2) according to claim 6, **characterized in that** the cylinder (3) has a single-acting connection point (34, 38) for each of the pistons (32, 36) in order to apply the locking pressure to the pistons (32, 36), the connection points being connected to one other by means of a connecting line (348).

8. Agricultural mower (2) according to either of claims 6 to 7,
**characterized in that** in the central placement (T) of the cylinder (3), the two pistons (32, 36) are arranged in the end position (e).

9. Agricultural mower (2) according to any of claims 6 to 8,
**characterized in that** in a retracted placement (E) of the cylinder (3), a first of the two pistons (32, 36) is arranged in the starting position (a), and the other is arranged in the end position (e), and **in that** in an extended position (A) of the cylinder (3), the first of the two pistons (32, 36) is arranged in the end position (e), and the other is arranged in the starting position (a).

10. Agricultural mower (2) according to any of claims 6 to 9,
**characterized in that** the two pressure chambers (33, 37) are connected to one other by means of a passage (30), the cylinder (3) having a double-acting connection point (39) for applying a damping pressure to one of the two pressure chambers (33, 37), the mower (2) being designed to apply the damping pressure to the double-acting connection point (39) in field operation in order to damp the pivoting movement.

11. Work train comprising a tractor (1) and an agricultural mower (2) according to any of the preceding claims, which mower is attached to a three-point hitch (12) of the tractor (1) for operation in overrun mode.

12. Work train according to claim 11, **characterized in that** the mower (2) can be reversibly raised from a working placement in field operation into a raised placement in the headland and/or during road transport by raising lower links (13) of the three-point hitch (12), the work train being designed to lock the mowing unit (26) in the central position (M) using the linear actuator when the mower (2) is raised.

13. Work train according to claim 12, **characterized in that** the linear actuator is designed as a cylinder (3) having two cylinder parts (31, 35), each comprising a piston (32, 36) which is can be moved back and forth in a pressure chamber (33, 37), a connection line for applying a lifting pressure to the lower links (13) of the three-point hitch (12) being connected to a connecting line (348) for applying a locking pressure to the pistons (32, 36) in order to lock the mowing unit (26) in the central position (M).

14. Method for locking a mowing unit (26) of an agricultural mower (2) according to any of claims 1-10, in which method a locking pressure is applied to a hydraulic cylinder (3), in particular a double cylinder having two pistons (32, 36), so that the cylinder (3) is adjusted into a central placement (T) and locks the mowing unit (26) in a central position (M).

## Revendications

1. Faucheuse (2) agricole prévue pour fonctionner en fonctionnement en décélération et présentant un châssis (21) destiné à être monté sur un dispositif de levage à trois points (12) d'un tracteur (1), dans laquelle la faucheuse (2) présente un mécanisme de fauchage (26) comportant un longeron de fauchage (25) qui s'étend transversalement à une direction de déplacement (51), dans laquelle le mécanisme de fauchage (26) est suspendu de manière pendulaire au châssis (21) de sorte que, dans un fonctionnement sur champ, il peut pivoter en va-et-vient dans un sens de pivotement (50) et à contre-sens de celui-ci autour d'un axe de pivotement (20) à partir d'une position centrale (M) par rapport au châssis (21),
dans laquelle
la faucheuse (2) présente un actionneur linéaire avec lequel le mécanisme de fauchage (26) peut être bloqué dans la position centrale (M), dans un placement relevé qui est pris en tournière et/ou lors du fonctionnement sur route, dans laquelle le mécanisme de fauchage (26) est automatiquement bloqué dans la position centrale (M) lors du relevage de la faucheuse (2).

2. Faucheuse (2) agricole selon la revendication 1, **caractérisée en ce que** l'actionneur linéaire est disposé entre le châssis (21) de la faucheuse (2) et le mécanisme de fauchage (26).

3. Faucheuse (2) agricole selon l'une des revendications précédentes, **caractérisée en ce que** l'actionneur linéaire est un vérin (3) hydraulique ou électrohydraulique.

4. Faucheuse (2) agricole selon la revendication 3,
**caractérisée en ce qu'**elle est configurée pour appliquer une pression de blocage au vérin (3) pour le blocage du mécanisme de fauchage (26) en position centrale (M) de sorte que ledit mécanisme de fauchage se place dans un placement central (T).

5. Faucheuse (2) agricole selon l'une des revendications 3 à 4, **caractérisée en ce que** le vérin (3) est soit sans pression en fonctionnement sur champ, soit prévu sous forme de moyen d'amortissement pour l'amortissement du mouvement de pivotement autour de l'axe de pivotement (20).

6. Faucheuse (2) agricole selon l'une des revendications 3 à 5, **caractérisée en ce que** le vérin (3) présente deux parties de vérin (31, 35) comportant respectivement un piston (32, 36) et une chambre de pression (33, 37) pour la réception du piston (32, 36), dans laquelle les pistons (32, 36) peuvent être coulissés linéairement dans leur chambre de pression (33, 37) respectivement d'une position initiale (a) à une position finale (e).

7. Faucheuse (2) agricole selon la revendication 6, **caractérisée en ce que** le vérin (3) présente respectivement un raccord à simple effet (34, 38) pour chacun des pistons (32, 36) pour l'application de la pression de blocage aux pistons (32, 36), lesquels raccords à simple effet sont raccordés entre eux au moyen d'une conduite de raccordement (348).

8. Faucheuse (2) agricole selon l'une des revendications 6 à 7, **caractérisée en ce que,** dans le placement central (T) du vérin (3), les deux pistons (32, 36) sont disposés dans la position finale (e).

9. Faucheuse (2) agricole selon l'une des revendications 6 à 8, **caractérisée en ce que,** dans un placement rétracté (E) du vérin (3), un premier des deux pistons (32, 36) est disposé dans la position initiale (a), et l'autre est disposé dans la position finale (e), **et en ce que,** dans une position déployée (A) du vérin (3), le premier des deux pistons (32, 36) est disposé dans la position finale (e), et l'autre est disposé dans la position initiale (a).

10. Faucheuse (2) agricole selon l'une des revendications 6 à 9, **caractérisée en ce que** les deux chambres de pression (33, 37) sont raccordées l'une à l'autre au moyen d'un passage (30), dans laquelle le vérin (3) présente un raccord à double effet (39) pour l'application d'une pression d'amortissement à l'une des deux chambres de pression (33, 37), dans laquelle la faucheuse (2) est configurée pour appliquer la pression d'amortissement au raccord à double effet (39) en fonctionnement sur champ pour l'amortissement du mouvement de pivotement.

11. Train de travail comprenant un tracteur (1) et une faucheuse (2) agricole selon l'une des revendications précédentes, laquelle est montée sur un dispositif de levage à trois points (12) du tracteur (1) pour le fonctionnement en fonctionnement en décélération.

12. Train de travail selon la revendication 11, **caractérisé en ce que** la faucheuse (2) peut être relevée dans les tournières et/ou lors du transport sur route de manière réversible d'une position de travail sur champ à une position relevée par le relevage de barres de traction (13) du dispositif de levage à trois points (12), dans lequel le train de travail est configuré pour bloquer le mécanisme de fauchage (26) dans la position centrale (M) lors du levage de la faucheuse (2) avec l'actionneur linéaire.

13. Train de travail selon la revendication 12, **caractérisé en ce que** l'actionneur linéaire est réalisé sous forme de vérin (3) comportant deux parties de vérin (31, 35) qui comprennent respectivement un piston (32, 36) qui peut être coulissé en va-et-vient dans une chambre de pression (33, 37), dans lequel une conduite de raccordement pour l'application d'une pression de levage aux barres de traction (13) du dispositif de levage à trois points (12) est raccordée à une conduite de raccordement (348) pour l'application d'une pression de blocage aux pistons (32, 36) pour le blocage du mécanisme de fauchage (26) dans la position centrale (M).

14. Procédé pour le blocage d'un mécanisme de fauchage (26) d'une faucheuse (2) agricole selon l'une des revendications 1 à 10, dans lequel un vérin (3) hydraulique, en particulier un vérin double comportant deux pistons (32, 36), est soumis à une pression de blocage de sorte que le vérin (3) se place dans un placement central (T) et bloque le mécanisme de fauchage (26) dans une position centrale (M).
